# EUROPEAN PATENT APPLICATION

(11) **EP 1 249 776 A1**
(43) Date of publication of application: **16.10.2002**
(21) Application number: 01309228.3
(22) Date of filing: 31.10.2001
(51) Int. Cl.: G06F 17/60

(54) **Method for unilevel marketing**

(30) Priority: 10.04.2001 US 832282
(71) Applicant: Morinda, Inc., Orem, Utah 84059 (US)
(72) Inventor: Olsen, Kelly, Orem, Utah 84057 (US); Garrity, Aaron, Utah 84062 (US)
(74) Representative: Wilson, Peter David

(57) **Abstract**

The present invention is directed to a method of unilevel marketing and distribution. A distributor receives personal information regarding a referred customer from a sales representative over a world wide computer network. The distributor incorporates the personal information into promotional material for the referred customer. The materials are distributed directly to the referred customer from a centralized distributor. When the customer places an order for goods, the distributor receives the order which includes a means for identifying the sales representative who made the reference. The sales representative is then credited with the sale.

## Description

### BACKGROUND

### 1. Field of the Invention

The present invention is directed toward a method for selling products through a unilevel marketing system. More specifically, the present invention is directed toward a method for improved direct marketing through identified sales representatives.

### 2. Background

Direct marketing has become a popular means of promoting and selling goods to customers, in many cases supplanting traditional lines of distribution. Using improved means of communication with customers, manufacturers and wholesalers are able to effectively promote their goods directly to the consumers and end users. By doing so, direct marketers are able to eliminate mid-level promoters and distributors and thereby reduce the costs of delivering the products to the consumers.

Despite its advantages, promoting goods using a direct marketing sales approach can be difficult, and has a number of disadvantages when compared with traditional method of marketing and distribution. Because manufacturers do not have personal contact with the customers, direct marketing must rely on mass distribution of promotional material. Promotional materials prepared for direct marketing must be designed to appeal to as many potential customers as possible, requiring a "lowest common denominator" approach to interesting the customer in the products. Because the direct marketer is removed from the consumer, there is little opportunity for the direct marketer to learn about the customer and craft a sales pitch according to the customer's specific reactions to past and present promotional efforts. This lack of personal interaction between the customer and the seller makes it difficult for a direct marketer to secure a loyal customer base and respond to a customer's needs.

Multilevel marketing, another popular method of promoting and distributing goods, takes a decidedly different approach. Multilevel marketing interjects multiple mid-level promoters between the seller and the buyer. These mid-level promoters encourage others to promote the seller's goods with each promoter taking a percentage of the final sale. One advantage to this method is that promoters are highly motivated to make personal contact with customers, initially to convince the customers to buy goods, but also to recruit the customers to become a mid-level promoter themselves. The intimate interaction between the individuals promoting the goods and the potential customers greatly increases the likelihood of success in the sales. As customers become promoters themselves, they also become more loyal to the products and become more frequent purchasers themselves.

As with traditional marketing methods, the multilevel marketing approach can result in significant increases in the price to the customer over direct marketing because commissions for each of the several mid-level promoters must be factored into the final price. The increased price paid by customers who purchase goods promoted and distributed through traditional methods or multilevel marketing methods underscores the sales of effectiveness of establishing personal contact between the customer and the seller.

The present marketing and promoting methods illustrate that direct marketing provides a very cost effective way to distribute goods to customers, direct marketing is not an effective promotional method for marketing and selling the goods. Conversely, traditional distribution multilevel marketing allow the seller to have a sales representative make personal contact with the potential customer and thereby increase the chances of making the sale, but in doing so, increase the final cost to the customer. What is needed is a cost effective method for allowing a direct marketer to make personal contact through a sales representative with the potential customer and motivate the sales representative to promote the products while minimizing and eliminating where possible the expenses associated with midlevel promotion and distribution.

### SUMMARY AND OBJECTS OF THE INVENTION

The present invention provides a method for selling product through direct distribution channels using promotional goods personalized for a potential customer by a sales representative. The method comprises several steps the first of which is receiving a reference for a specific potential customer from the sales representative. The reference includes a personalized message from the sales representative to the potential customer. The next step is preparing the promotional materials to be sent to the referenced customer. The promotional materials will contain the personalized message to the referred customer and will include means for identifying the sales representative who made the reference. The personalized promotional materials are then distributed to the customer. The promotional materials also contain a means for identifying the sales representative who referred the customer. Means for identifying the sales representative may be, for example, a sales representative number included on the promotional materials. When a customer wishes to purchase goods related to the promotional materials, the distributor will receive the customer request or purchase order, which includes the sales representative identification. Upon receiving payment for the order, a portion of the payment is designated as a commission for the identified sales representative. The payments are distributed to the sales representative based on the purchases made from the promotional materials.

The present invention provides a number of advantages over prior art. Using the present invention, the sales representative can receive credit or commission for sales originating from a catalog, which was shipped directly to a customer from a distribution center without intermediate handling by the sales representative. Furthermore, the promotional materials contain the personalized message of the sales representative who referred the customer, thereby allowing the sales representative to personally and specifically promote the goods to the customer.

The present invention may employ a global computer network, such as the internet, allowing the sales representative to electronically and remotely refer the customer and to add a personalized message to the promotional materials that will be sent to the customer. For example, if a catalog is to be delivered when the customer is referred, the sales representative may include a personalized message to be printed in a conspicuous place on the catalog. The message may notify the potential customer that the sales representative (who is known to the customer) is sending the catalog and may refer the customer to specific items of interest within the catalog. This present invention provides this particular advantage to the sales representative, if the sales representative knows the customer's specific needs or preferences. Importantly, the chances are much higher that the customer will look at a personalized catalog with specific references from the sales representative than are the chances they would look just receiving a catalog.

The personalized message is preferably entered by the sales representative using a website operated by the seller and printed directly from the entered message onto the promotional materials. Thus, there is less chance of data entry error in the message. This improvement in the accuracy of customer referral information is significant. The erroneous data entry that results in loss of a referral because of a wrong address or erroneous personalized message could cost the sales representative a substantial commission stream.

The present invention will encourage the sales representative to distribute and personalize as many catalogs or promotional materials as possible. These catalogs and promotional materials are delivered to "hand picked" customers, as referred by the sales representative, and are much more likely to result in sales than randomly mailed promotional materials. Thus, the present invention provides the advantages of the direct marketing by allowing the customer to receive materials from a seller and purchase those materials directly from the seller and has the advantages of the personal contact found in traditional marketing and multilevel marketing.

Another advantage of the present invention is that the sales representative can receive payments automatically because the sales representative's identification number is submitted with the purchase order. When the seller receives the money from the purchase order, the seller or distributor can easily forward funds to the sales representative's account. The distributor can associate the identification number of the sales representative with a particular bank account and of the sales representative, where such information is made available by the sales representative.

Another advantage of the present invention is that it allows all the parties access to the information from the centralized office. Customer questions or issues that arise concerning product promotion, sales, distribution, payment, customer service can all be handled from a centralized office. This greatly facilitates technical and customer support since it can be provided at a regional level.

### BRIEF DESCRIPTION OF THE DRAWINGS

The foregoing and other objects and features of the present invention will become more fully apparent from the following description and appended claims, taken in conjunction with the accompanying drawing. Understanding that these drawing depicts only a typical embodiment of the invention and is, therefore, not to be considered limiting of its scope, the invention will be described and explained with additional specificity and detail through the use of the accompanying drawing in which:

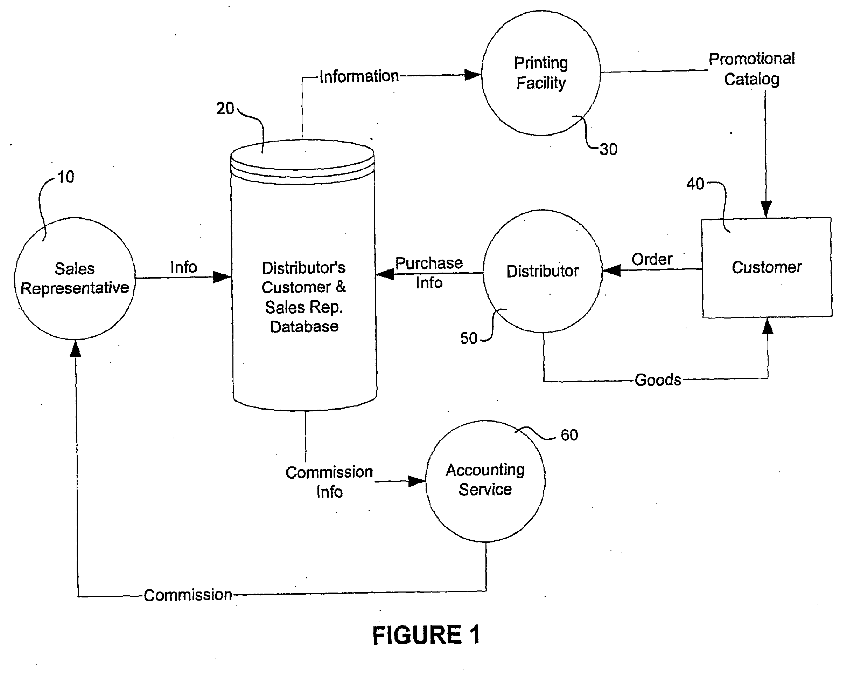

Figure 1 shows a flow chart of one embodiment the present invention.

### DETAILED DESCRIPTION OF THE PREFERRED EMBODIMENTS

It will be readily understood that the components of the present invention, as generally described and illustrated in the figure herein, could be arranged and designed in a wide variety of different configurations. Thus, the following more detailed description of the embodiments of the system and method of the present invention, and represented in Figure 1 is not intended to limit the scope of the invention, as claimed, but is merely representative of the presently preferred embodiments of the invention.

The presently preferred embodiments of the invention will be best understood by reference to the drawing, wherein like parts are designated by like numerals throughout.

The present invention provides an improved method for a distributor to carry out direct marketing. For the purposes of this application, the distributor is a party or parties who promote, sell, and distribute a product. The improved method allows sales representatives to refer specific customers to the distributor and to personalize for the customer promotional materials that will be sent from the distributor to the customer. The invention also allows the sales representative to receive a commission for any sales resulting from the referred customer's use of the promotional materials to purchase products.

To carry out the method of the present invention, a sales representative will select one or more potential customers who are known to the sales representative and with whom the sales representative has or intends to have a personal business relationship. The distributor receives information about the customer from the sales representative and receives a personalized message to the customer from the sales representative that can be included on promotional materials to be sent to the customer. The personalized message can be sent in the form of printed text composed by the sales representative or an audio or video message created by the sales representative. The information can be received by the distributor through electronic means and is preferably received by using a world wide computer network such as the internet. The information can be received via E-mail over a secure web page, by telephone, a electronic facsimile transmission or similar means for transmitting data and information electronically. The information provided by the sales representative can include the contact information of the customer, such as the name, address, E-mail, phone, and fax numbers of the customer to allow the promotional materials to be sent to the customer. Additionally, the sales representative may want to provide personal information, such as generic information about the customer including the customer's age, interests, income level, household circumstances, or other information relevant to providing the customer promotional material. Likewise, the sales representative may select from various types of promotional materials that can be sent to the customer. For example, the sales representative may choose the format of the promotional material, whether the promotional material is a printed text, an E-mail, a digitized multimedia presentation, standard videotape or audiotape presentation.

The sales representative will also provide and a distributor will receive a personalized greeting or message form the sales representative to the customer. The greeting may identify the sales representative and the representative's contacts with the customer, and may direct the attention of the customer to particular aspects of the promotional materials. In one embodiment, the promotional materials themselves may be altered to more specifically suit the needs of the referred customer.

In addition to customer related information, the sales representative will provide the distributor with information about the sales representative. Specifically, the sales representative will include a means for the distributor to identify the sales representative, such as a sales representative commission number or identification number. A commission number allows the distributor to automatically credit the sales representative with a commission sales for any purchases made by customers who receive promotional materials from that sales representative and make purchases based on those promotional materials. The sales representative information will be included in the promotional materials sent to the customer. Having the identification information allows the distributor to offer commissions for what are otherwise direct marketing promotions and sales and may also allow the sales representative to provide the distributor with preferred options for commission payment. The sales representative may direct the distributor a preferred bank account into which commissions should be paid or may request a particular payment period. Payment of the commission would be coordinated using the sales representative identification number on the promotional materials. The sales representative information will also help both the distributor and the sales representative maintain their financial accounts.

Once the information provided by the sales representative is received by the distributor, the information is stored in an electronic format. Preferably, the information is provided over the internet and is stored in machine memory such as a customer and sales representative data base.

The information received by the distributor is then incorporated onto promotional goods to be sent to the customer. The promotional goods could be any type of promotional materials, such as a video, audio media, multi media or digital presentations, E-mails, advertisements, catalogs, brochures, private samples, flyers, coupons, letters, or applications for services. The type of promotional goods on which the information is incorporated may be in part dependent upon the type and form of the information that is collected from the sales representative. Preferably, the promotional material also includes some form of a purchase order bearing the sales representative identification number.

The information, stored in the machine memory is transferred into an appropriate media to be incorporated on the promotional materials. The information incorporated may not include all of the information initially supplied by the sales representative. In other words, the information might only include the personalized message from the sales representative and the identification information of the sale representative. The sales representative may wish to provide contact information for the customer to contact the sales representative directly.

The promotional materials are then distributed to the customer with the personalized message. The method of distribution may depend in part upon the types of materials which are distributed. If possible, the materials may be distributed over the world wide computer network in an electronic form. The promotional materials may be distributed through other channels, such as through postal services, telephone solicitations, facsimile or other means of electronic communication.

Having received the personalized promotional materials, the customer chooses to purchase a product based on the receipt of the promotional materials. The customer requests the products be delivered and includes payment for the products. The means by which the customer requests the products, such as, for example, mailing in a purchase order, ordering products over the telephone, or purchasing over the internet) would require the customer to include information that identifies the sales representative as well as the products being ordered. For example, the customer may be required to indicate the goods being purchased, the number of goods, shipping address, and additional customer information along with the sales representative's identification number. If the sales representative identification number is not automatically included in the purchase order, the customer may be required to include the sales representative number in the purchase order. Preferably, the information that identifies the sales representative who referred the customer is automatically incorporated into the product ordering process. For example, the sales representative's identification number may be pre-printed on purchase orders supplied with the promotional materials.

The customer will be required to make payment for the goods. The present invention contemplates payment methods including electronic forms of payment, such as electronic withdrawal or credit card purchases by phone or facsimile, or internet related payment forms, such as purchasing goods from a web site or using electronic credits. More traditional forms, such as mailing in a check or money order are also contemplated. The customer may be requested to provide additional information at the time of purchase in the form of consumer survey or other questionnaire. The information could include inquiries as to the customer's previous purchases, spending habits, interests, income, demographics, customer satisfaction, and customer service comments.

The customer may place the order by mail or some form of electronic communication, such as telephone, facsimile, electronic mail, or through a website using the world wide web.

The information provided by the customer may be included in the customer database and compiled with information provided by the sales representative to form a customer profile and a customer purchase record. The information may be made available to various parties as desired. For example, the information may be made available to the sales representative to allow the representative to evaluate and modify his sales approach with the customer. The customer may also be allowed to view the information to keep track of purchases made with the distributor. The financial information relative to the customer's purchase may be provided through the database to the accounting department. Where the information provided is not in electronic form, the information can be transferred to an electronic database using standard data entry techniques and then included on the database.

Upon receiving the order and payment for the goods, the distributor then delivers the goods to the customer through an appropriate distribution channel. Depending upon the goods, the channel of distribution could include delivering the goods through the mail, through some form of electronic transmission or personal delivery.

Once the distributor has received the payment for the goods, the distributor can pay the sales representative a commission based on the products ordered by the customer which bear the sales representative's identification number. The commissions can be quickly ascertained and paid by the accounting department of the distributor since the customer order itself contains the information as to who should receive the commission. By entering information from the customer's purchase into the electronic customer and sales representative database, the sales representative can track purchases by a particular customer and easily calculate what the anticipated commissions will be.

Thus, the present invention provides a distributor the ability to directly distribute goods to a customer and circumvent the costs of having mid-level distribution while at the same time providing the customer the personal contact that facilitates the promotion of the products. The present invention also provides the motivation for the sales representative to promote products being distributed directly and to develop a personal business relationship with customers the sales representative refers. In this way, the present invention provides a method of unilevel marketing and distribution.

Figure 1 shows a flow chart of one embodiment of the present invention wherein a sales representative 10 provides information that is included in a customer and sales representative database owned by the distributor 20. The information has a sales representative identification number and a personalized message from sales representative 10 to a customer 40. The information stored in the database 20 is then transmitted to a printing facility 30 where the information is printed on a catalog promoting the distributor's goods.

The promotional catalog with the personalized message is then shipped to customer 40. Customer 40 is able to read the personalized message from sales representative 10 which may direct customer to the particular items in the catalog that are of interest to customer 40. Customer 40 then places an order with the distributor 50. The customer's order includes the sales representative's identification number and payment for the goods ordered. The payment and purchase information are stored in the distributor's customer and sales representative database 20, and the goods are shipped to the customer 40. An accounting service 60 has access to database 20 and receives commission information from database 20 regarding the amount of commission to be paid to sales representative 10. Accounting service 60 then transmits the commission to sales representative 10 as part of the sales representative's periodic payments.

In an alternative embodiment, the steps of receiving and storing information from the sales representative, incorporating that information into promotional materials, sending the promotional materials to the customer, receiving orders from the customer, shipping requested goods to the customer, and distributing commissions to the sales representatives are all performed by the distributor. In another embodiment, the various steps of the present invention can be carried on by multiple parties who perform one or any combination of the steps of the present invention.

The present invention may be embodied in other specific forms without departing from its spirit or essential characteristics. The described embodiments are to be considered in all respects only as illustrative and not restrictive. The scope of the invention is, therefore, indicated by the appended claims, rather than by the foregoing description. All changes which come within the meaning and range of equivalency of the claims are to be embraced within their scope.

## Claims

1. A method of unilevel marketing and distribution comprising the steps of:
receiving personal information regarding a referred customer from a sales representative;
incorporating said personal information into promotional material,
distributing said promotional material directly to the referred customer from a centralized distributor;
receiving orders from referred customers, wherein said orders include means for identifying the sales representative, and
crediting the sales representative with a sale from the distributed promotional goods.

2. The method of claim 1, wherein the personal information received from the sales representative is received over the world wide computer network using a web page accessed by the sales representative.

3. The method of claim 1, wherein the personal information includes a personalized message from the sales representative to the customer and the means for identifying the sales representative is an identification number.

4. The method of claim 1, wherein the sales representative is paid a commission for being the sale representative who referred the customer making the purchase.

5. The method of claim 1, wherein said personal information is received over the internet.

6. The method of claim 1, wherein the personal information is received via E-mail.

7. The method of claim 1, wherein the personal information is received via a telephone.

8. The method of claim 1, wherein the promotional materials are in an audio form.

9. The method of claim 1, wherein the promotional materials are in printed form.

10. The method of claim 1, wherein the promotional materials are in a video presentation format.

11. The method of claim 1, wherein the personal information provided by the sales representative includes the customer's age, interests, income level, or household.

12. The method of claim 1, wherein the personal information is received by a distributor is stored in machine memory.

13. The method of claim 1, wherein the personal information received from the sales representative is stored in a customer database.

14. The method of claim 1, wherein the promotional materials are transmitted to the customer over the internet in the form of electronic mail.

15. The method of claim 1, wherein the customer purchases over the internet.

16. A method for selling product through direct promotion and direct distribution to a customer comprising the steps of:
receiving information regarding a customer referral from a sales representative over a world wide computer network;
storing said information in a customer database;
incorporating said information into promotional materials;
sending said promotional materials to said customer;
receiving a purchase order form said customer, said purchase order containing means for identifying the sales representative; and
crediting the sales representative with a commission for said purchase.

17. The method of claim 16, wherein the personal information received from the sales representative is received over the world wide computer network using a web page accessed by the sales representative.

18. The method of claim 16, wherein the personal information includes a personalized message from the sales representative to the customer and the means for identifying the sales representative is an identification number.

19. The method of claim 16, wherein said personal information is received over the internet.

20. The method of claim 16, wherein the personal information is received via E-mail.

21. The method of claim 16, wherein the personal information is received via a telephone.

22. The method of claim 16, wherein the promotional materials are in an audio form.

23. The method of claim 16, wherein the promotional materials are in printed form.

24. The method of claim 16, wherein the promotional materials are in a video presentation format.

25. The method of claim 16, wherein the personal information provided by the sales representative includes the customer's age, interests, income level, or household.

26. The method of claim 16, wherein the personal information is received by a distributor is stored in machine memory.

27. The method of claim 16, wherein the personal information received from the sales representative is stored in a customer database.

28. The method of claim 16, wherein the promotional materials are transmitted to the customer over the internet in the form of electronic mail.

29. The method of claim 16, wherein the customer purchases over the internet.
